# FASCICULE DE BREVET EUROPEEN

(11) **EP 4 499 273 B1**
(45) Date de publication et mention de la délivrance du brevet: **25.11.2026**
(21) Numéro de dépôt: 23719911.2
(22) Date de dépôt: 23.03.2023
(51) Int. Cl.: B01D 53/62

(54) **PROCÉDÉ D'ABSORPTION DE DIOXYDE DE CARBONE PAR DU PHOSPHOGYPSE**
VERFAHREN ZUR ABSORPTION VON KOHLENDIOXID MITTELS PHOSPHOGIPS
PROCESS FOR ABSORBING CARBON DIOXIDE BY PHOSPHOGYPSUM

(30) Priorité: 25.03.2022 FR 2202678
(43) Date de publication de la demande: 05.02.2025
(73) Titulaire: OCP SA, Casablanca, 20330 (MA); Université Mohammed VI Polytechnique, Ben Guerir, 43150 (MA)
(72) Inventeur: HASSOUNE, Hicham, 24000 El Jadida (MA); LACHEHAB, Adil, 24000 El Jadida (MA); BENHIDA, Rachid, 06000 Nice (FR); DHIBA, Driss, 20330 Casablanca (MA); BOULIF, Rachid, 24000 El Jadida (MA)
(74) Mandataire: Gsmart
(86) Numéro de dépôt international: PCT/MA2023/050002
(87) Numéro de publication internationale: WO 2023/182878

(56) Documents cités:
- CN-A- 102 627 309
- FR-A1- 3 113 050
- US-B2- 8 846 562

## Description

### DOMAINE DE L'INVENTION

La présente invention concerne un procédé de captage minéral du dioxyde de carbone par du phosphogypse.

### ETAT DE LA TECHNIQUE

Le dioxyde de carbone (CO₂) est un gaz à effet de serre responsable du réchauffement climatique. Sa concentration dans l'atmosphère a considérablement augmenté du fait de l'utilisation toujours croissante d'énergies fossiles.

La séquestration du dioxyde de carbone par carbonatation minérale en milieux aqueux représente une alternative intéressante pour réduire la concentration de ce gaz à effet de serre. Il s'agit d'un processus chimique simple menant à la formation de carbonates de calcium, produits thermodynamiquement stables, et sans effets néfastes sur l'environnement, par absorption du CO₂ par des composés riches en calcium.

L'industrie chimique des phosphates génère des quantités considérables d'un composé riche en calcium, le phosphogypse constitué principalement de sulfate de calcium dihydraté (CaSO₄, 2H₂O). La caractérisation de ce matériau riche en calcium et en sulfate a montré qu'il présentait une bonne capacité à être carbonaté. La préparation du carbonate de calcium à partir du phosphogypse a été largement étudiée. De nombreux procédés de préparation du carbonate de calcium à partir du phosphogypse ont ainsi été proposés.

Par exemple, WO 2010/142859 propose une méthode de production du carbonate de calcium qui consiste à utiliser l'oxyde de calcium pour piéger le dioxyde de carbone, nécessitant plusieurs milieux de réaction présentant des valeurs de pH différents.

EP1513771A1 propose un procédé de production d'un précipité de carbonate de calcium qui utilise l'hydroxyde de calcium avec le dioxyde de carbone pour former des carbonates de calcium.

US 8846562 divulgue une méthode de préparation des nanoparticules de carbonate de calcium par réaction entre du phosphogypse comme source de calcium et de l'ammoniaque (NH₃) et du dioxyde de carbone (CO₂). Cette méthode nécessite de l'ammoniaque et un catalyseur tel qu'un sel de nickel. CN102627309A utilise également un traitement par l'ammoniaque.

CN101337685A décrit un procédé de production de carbonate de calcium en utilisant du laitier de décomposition du phosphogypse à des températures élevées (950°C à 1200°C). Ce procédé génère de l'hydrogène sulfuré (H₂S) qui est très toxique.

US 20180022614 décrit un procédé de conversion du phosphogypse en un précipité de carbonate de calcium en présence d'un acide minéral et d'une source de carbonate, qui peut être le CO₂.

Toutefois, ces procédés sont coûteux, longs et complexes à mettre en oeuvre. Par exemple, certains de ces procédés nécessitent une ou plusieurs étapes de carbonatation intermédiaires, nécessitant des milieux réactionnels particuliers. En outre, ces procédés produisent souvent des déchets solides ou liquides néfastes pour l'environnement.

Ainsi, un besoin demeure pour la mise à disposition d'un procédé de production de carbonate de calcium à partir des rejets de phosphogypse et du CO₂, qui soit simple à mettre en oeuvre, transposable à grande échelle, rapide, économiquement attractif et avec un impact moindre sur l'environnement.

### EXPOSE DE L'INVENTION

La présente invention porte sur un procédé d'absorption de dioxyde de carbone par du phosphogypse, comprenant une étape d'injection de dioxyde de carbone dans un milieu réactionnel comprenant une solution alcaline dont le pH est compris entre 7,5 et 9 et du phosphogypse, et la formation de carbonate de calcium, caractérisé en ce que la solution alcaline est de l'eau de mer.

De préférence, le procédé comprend une étape de préparation du milieu réactionnel par dispersion du phosphogypse dans la solution alcaline, de préférence jusqu'à la stabilisation du pH à une valeur comprise entre 8,5 et 9,5.

Avantageusement, le milieu réactionnel est agité pendant l'étape d'injection du dioxyde de carbone.

De préférence, le procédé comprend une étape de filtration pour collecter le carbonate de calcium formé.

De manière avantageuse, le dioxyde de carbone est injecté à un débit allant de 0,7 à 1,3 L/min. Avantageusement, le phosphogypse est présent à une concentration allant de 0,1 kg/L à 0,5 kg/L dans le milieu réactionnel. De préférence, le carbonate de calcium obtenu présente une pureté allant de 30% à 65%, de préférence de 45% à 65%.

### BREVE DESCRIPTION DES FIGURES

D'autres caractéristiques et avantages de l'invention ressortiront de la description détaillée qui va suivre, en référence aux dessins annexés sur lesquels :
La figure 1 est un schéma de principe du procédé de la présente invention.
La figure 2 est un graphe représentant l'évolution du pH en fonction du temps de réaction de la carbonatation du phosphogypse.
La figure 3 est un graphe d'une analyse thermogravimétrique du carbonate de calcium obtenu par le procédé de l'invention.
La figure 4 est un diffractogramme de rayons X du carbonate de calcium obtenu par le procédé de l'invention.
La figure 5 est un spectre d'analyse infrarouge du carbonate de calcium obtenu par le procédé de l'invention.
La figure 6 est une microscopie électronique de balayage (MEB) du carbonate de calcium obtenu par le procédé de l'invention.
La figure 7 représente un spectre de rayons X à dispersion d'énergie (EDX) du carbonate de calcium obtenu par le procédé de l'invention.

### DESCRIPTION DETAILLEE DE MODES DE REALISATION

Les inventeurs ont développé un procédé de préparation du carbonate de calcium à partir de phosphogypse répondant aux besoins exprimés.

Ainsi, le procédé de la présente invention comprend une étape d'injection de dioxyde de carbone dans un milieu réactionnel comprenant une solution alcaline dont le pH varie de 7,5 à 9 et du phosphogypse, conduisant à la formation du carbonate de calcium.

Le milieu réactionnel dans lequel le dioxyde de carbone est injecté peut être une dispersion de phosphogypse dans une solution alcaline, dont la concentration se situe typiquement entre 0,1 et 0,5 kg/L. La dispersion peut être préparée par agitation du phosphogypse dans la solution alcaline. Typiquement, l'agitation est réalisée au moyen d'un agitateur magnétique. L'agitation est typiquement maintenue jusqu'à stabilisation du pH, typiquement jusqu'à stabilisation du pH dans la gamme 8,5-9,5. La dispersion obtenue est alors homogène avec une concentration élevée d'ions calcium libres en solution.

Ainsi dans certains modes de réalisation, le procédé de la présente invention comprend les étapes suivantes :
(a) dispersion du phosphogypse dans une solution alcaline dont le pH varie de 7,5 à 9 ;
(b) injection de dioxyde de carbone dans la dispersion obtenue à l'étape (a) conduisant à la formation du carbonate de calcium.

La dispersion du phosphogypse dans la solution alcaline permet la libération des ions calcium en solution et favorise ainsi la réaction de carbonatation qui se produit lors de l'injection de dioxyde de carbone dans la dispersion obtenue à l'issue de l'étape a). En effet, dès l'injection du dioxyde de carbone dans la dispersion obtenue à l'issue de l'étape a), le dioxyde de carbone se transforme rapidement en ions carbonate (CO₃²⁻ qui réagissent avec les ions calcium (Ca²⁺) pour former des carbonates de calcium (CaCO₃).

Dans certains modes de réalisation, des germes de carbonate de calcium peuvent être ajoutés à la dispersion obtenue à l'étape a). Dans d'autres modes de réalisation, le dioxyde de carbone est injecté dans le milieu réactionnel sans dispersion préalable, par exemple par agitation jusqu'à stabilisation du pH, typiquement jusqu'à stabilisation du pH dans la gamme 8,5-9,5, du phosphogypse dans la solution alcaline.

La solution alcaline, dont le pH varie de 7,5 à 9, est typiquement de l'eau de mer. Le terme « eau de mer » tel qu'utilisé ici désigne l'eau salée des mers et des océans de la Terre, c'est-à-dire une eau contenant des sels dissous. Dans le procédé de la présente invention, lorsque la solution alcaline est de l'eau de mer, l'eau de mer joue un triple rôle. Elle constitue d'une part la source de basicité du milieu réactionnel. Elle évite le recours à l'emploi de bases fortes qui peuvent être onéreuses et toxiques. D'autre part, elle évite l'ajout d'eau ionisée et ainsi évite une étape de déionisation et de mélange additionnel. Enfin, elle évite les étapes de réactions intermédiaires dans lesquelles le phosphogypse est transformé en un produit intermédiaire qui se carbonate pour donner des carbonates de calcium. L'eau de mer est particulièrement avantageuse car il s'agit d'une ressource abondante peu onéreuse.

L'injection du dioxyde de carbone dans le milieu réactionnel, en particulier dans la dispersion, peut être réalisée à un débit allant de 0,7 ou 0,8 à 1 ou 1,3 litres par minute. Avantageusement, le dioxyde de carbone présente une pureté supérieure à 99%.

Le milieu réactionnel, en particulier la dispersion, est typiquement agité, au moyen d'un agitateur magnétique ou d'un moyen d'agitation mécanique adapté pour un procédé industriel, durant l'injection de dioxyde de carbone. Ainsi, le procédé de la présente invention peut comprendre une étape d'agitation du milieu réactionnel, en particulier de la dispersion.

Lorsque l'ensemble du phosphogypse a réagi et donc la valeur de pH est stabilisée, le milieu réactionnel, en particulier la dispersion, est filtré(e) pour donner du carbonate de calcium sous forme solide et un filtrat aqueux. Ainsi, le procédé de la présente invention peut comprendre une étape de filtration du milieu réactionnel, en particulier de la dispersion, une étape de séchage, et une étape de collecte du carbonate de calcium solide filtré et séché.

Le procédé de la présente invention permet de préparer du carbonate de calcium avec un rendement allant de 45 à 65%. Le carbonate de calcium obtenu présente typiquement une pureté allant de 30% à 65%.

Le procédé de la présente invention présente l'avantage de permettre une transformation directe du phosphogypse en carbonate de calcium dans le milieu réactionnel grâce à une valeur de pH du milieu réactionnel adaptée à la libération des ions calcium en solution. Ainsi, le procédé de la présente invention ne requiert pas d'étapes additionnelles de transformation du phosphogypse en produit intermédiaire de carbonatation et ne nécessite pas de changement du milieu réactionnel. Par ailleurs, le procédé de la présente invention ne génère aucun déchet solide ou liquide et s'avère donc être respectueux de l'environnement.

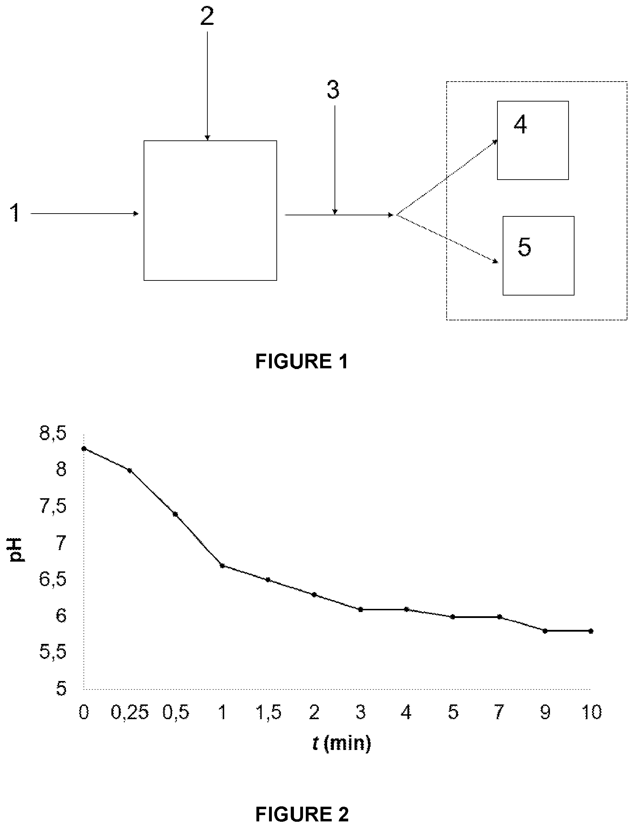

Le procédé de la présente invention peut être tel qu'illustré à la figure 1. Dans un premier temps, le phosphogypse 1 et la solution alcaline 2 sont mis en contact. Du dioxyde de carbone 3 est ensuite injecté dans le milieu réactionnel comprenant le phosphogypse 1 et la solution alcaline 2. A l'issue de la réaction de carbonatation (lorsque le phosphogypse a réagi), du carbonate de calcium 4 et de l'eau 5 sont collectés.

Les réactions chimiques mises en œuvre dans le procédé de la présente invention sont telles que décrites ci-dessous.

Au contact de la solution alcaline, en particulier de l'eau de mer, le phosphogypse (CaSO₄, 2H₂0) libère les ions calcium (Ca²⁺) selon l'équation (1) : [Math 1] ${CaSO}_{4} , 2 {H}_{2} O + solution alcaline \to {Ca}^{2 +} + S {O}_{4}^{2 -} + {H}_{2} O$

L'utilisation de l'eau de mer seule comme solution alcaline, sans ajout d'une source de basicité supplémentaire, permet de libérer des ions calcium Ca²⁺en solution, en plus des ions sulfate SO₄²⁻.

Lors de l'injection de dioxyde de carbone dans la solution alcaline, en particulier dans l'eau de mer, l'acide carbonique H₂CO₃ se forme selon l'équation (2) : [Math 2] ${CO}_{2} + {H}_{2} 0 \to {H}_{2} {CO}_{3}$

L'acide carbonique se dissocie en libérant un proton (H⁺) et un ion bicarbonate HCO₃⁻ selon l'équation (3) : [Math 3] ${H}_{2} {CO}_{3} \to {H}^{+} + {HCO}_{3}^{-}$

Le pH de la solution alcaline, en particulier de l'eau de mer, contrôle cette réaction. Si la concentration en H⁺ diminue, ce qui correspond à une augmentation de pH, le rééquilibrage de l'équation entraîne une réaction vers la droite et une plus grande quantité d'acide carbonique H₂CO₃ se dissocie en H⁺ et HCO₃⁻ À l'inverse, une augmentation de la concentration en H⁺ (soit une diminution du pH) entraîne une réaction vers la gauche et forme H₂CO₃ au détriment de HCO₃⁻.

Le bicarbonate HCO₃⁻ formé se dissocie ensuite en libérant un proton (H⁺) et un ion carbonate CO₃²⁻ selon l'équation (4) : [Math 4] ${HCO}_{3}^{-} \to {H}^{+} + {CO}_{3}^{2 -}$

Pour un pH donné, c'est-à-dire une concentration en H⁺ donnée dans la solution alcaline, en particulier dans l'eau de mer, les quantités relatives d'ions carbonates CO₃²⁻ et bicarbonates HCO₃⁻ s'ajustent jusqu'à l'atteinte d'un équilibre. Un pH supérieur à 7 favorise la production des ions carbonates CO₃²⁻, alors qu'un pH inférieur à 7 favorise les ions bicarbonates HCO₃⁻. De manière générale, les eaux de mer sont alcalines (pH > 7) et favorisent ainsi la formation des carbonates CO₃²⁻.

Les ions de calcium Ca²⁺ libérés selon l'équation (1) réagissent avec les ions carbonates CO₃²⁻ pour former le carbonate de calcium CaCO₃ qui précipite selon l'équation (5) : [Math 5] ${Ca}^{2 +} + {CO}_{3}^{2 -} \to {CaCO}_{3}$

Le procédé de la présente invention peut être tout particulièrement utile pour capter le dioxyde de carbone et par exemple ainsi réduire les concentrations en gaz à effet de serre. Ainsi, en d'autres termes, la présente invention porte également sur un procédé de captage minéral du dioxyde de carbone comprenant une étape d'injection de dioxyde de carbone dans un milieu réactionnel comprenant une solution alcaline dont le pH varie de 7,5 à 9 et du phosphogypse conduisant à la formation du carbonate de calcium. Les étapes de ce procédé peuvent être telles que précédemment décrites.

Le procédé ne génère pas d'hydrogène sulfuré (H₂S).

### EXEMPLES

Des exemples purement illustratifs et non limitatifs d'absorption du CO₂ par le phosphogypse dans un milieu alcalin sont décrits ci-dessous.

### Exemple 1 : Absorption du CO₂ par le phosphogypse (sans dispersion préalable dans le milieu alcalin) par injection directe de CO₂ gazeux pur dans le milieu réactionnel.

Du dioxyde de carbone est injecté avec un débit de 0,7-0,8 L/min dans un milieu réactionnel comprenant du phosphogypse (masse = 17-25 g) et de l'eau de mer (volume = 150 -250 mL) sans dispersion au préalable du phosphogypse dans l'eau de mer. L'ensemble est placé sous agitation.

L'agitation est maintenue jusqu'à ce que la totalité du phosphogypse se transforme en une phase solide et un liquide surnageant. Le mélange réactionnel est filtré pour donner une phase solide principalement constituée par le carbonate de calcium, et une phase liquide, selon l'équation (6) :

CaSO₄, 2H₂O + eau de mer + CO₂ → CaCO₃, + SO₄²⁻ + H₂O

### Exemple 2 : Absorption du CO₂ par le phosphogypse (avec dispersion dans le milieu alcalin) par injection directe de CO₂ gazeux pur dans le milieu réactionnel.

L'essai est réalisé dans les mêmes conditions que l'exemple 1. Cependant dans le présent exemple, le dioxyde de carbone est injecté dans le milieu réactionnel comprenant du phosphogypse et de l'eau de mer après dispersion au préalable du phosphogypse dans l'eau de mer. La dispersion est réalisée par agitation du phosphogypse dans l'eau de mer pendant un temps compris entre 15-25 min jusqu'à stabilisation du pH entre 8,5 et 9,5.

Le dioxyde de carbone CO₂ est injecté après cette stabilisation du pH avec un débit de 0,7-0,8 L/min. Dans cet exemple, le milieu réactionnel devient homogène et les ions Ca²⁺ sont plus libres en solution, ce qui favorise davantage la réaction de carbonatation.

### Exemple 3 : Absorption du CO₂ par le phosphogypse (avec dispersion dans le milieu alcalin) avec ajout de carbonate de calcium par injection directe de CO₂ gazeux pur pour accélérer le processus de nucléation.

L'essai est réalisé dans les mêmes conditions de l'exemple 2. Cependant, dans le présent exemple, des germes de carbonate de calcium (quelques milligrammes (3-6 mg) du carbonate de calcium) sont ajoutés dans le milieu réactionnel avant injection de CO₂.

Dès l'injection du CO₂, les premières particules du carbonate de calcium précipitent et se multiplient rapidement (nucléation et germination), ce qui accélère le processus de carbonatation.

### Exemple 4 : Absorption du CO₂ par le phosphogypse (avec dispersion dans le milieu alcalin) par injection directe de CO₂ gazeux pur à débit élevé dans le milieu réactionnel.

L'essai est réalisé dans les mêmes conditions de l'exemple 2. Cependant, dans cet exemple, le dioxyde de carbone a été injecté à un débit de 1-1,3 L/min.

Pour les exemples 1 et 2, le carbonate de calcium obtenu présente une pureté comprise entre 45% et 65%, et pour les exemples 3 et 4, le carbonate de calcium obtenu présente une pureté comprise entre 40% et 50%.

La cinétique de la carbonatation est illustrée sur la figure 2 qui représente l'évolution du pH du milieu réactionnel en fonction du temps de réaction dans l'exemple 2. Le pH, initialement égal à 8,5, diminue jusqu'à une valeur entre 5,5 et 6 pour un temps réactionnel de 10 minutes. La chute du pH correspond à l'acidification de la solution aqueuse de phosphogypse en raison de l'augmentation de la concentration des ions H⁺ générés selon les équations (3) et (4). **En** même temps, la concentration des ions carbonates CO₃²⁻ diminue avec la précipitation du carbonate de calcium CaCO₃ solide.

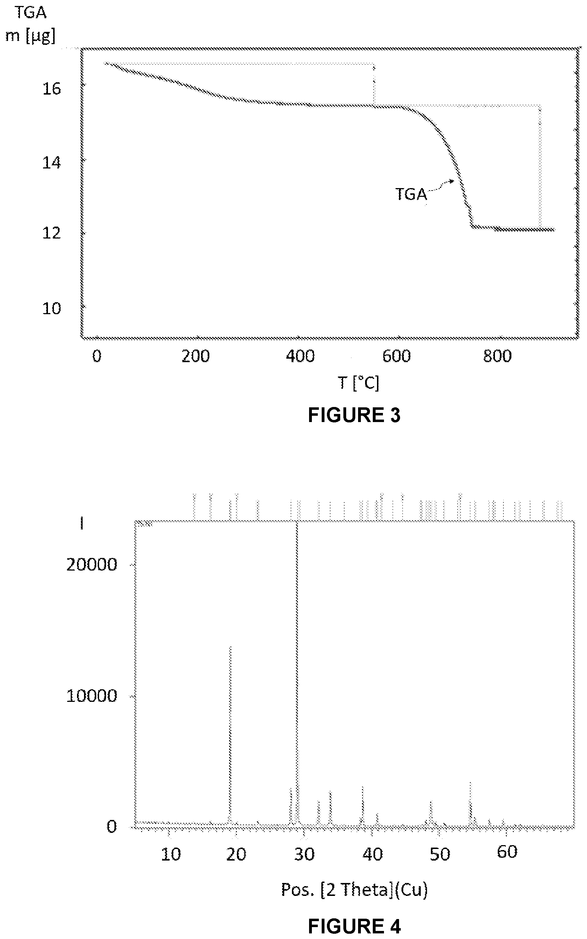

Le carbonate de calcium obtenu a été analysé par analyse thermogravimétrique (TGA) dans l'exemple 2. Le graphe montrant l'évolution de la masse m (%) de carbonate de calcium en fonction de la température T (°C) est représenté sur la figure 3. La masse de carbonate de calcium chute lorsque la température atteint 600°C, représentant une perte massique d'environ 35%. Cette perte de masse correspond à la décomposition du carbonate de calcium CaCO₃ en oxyde de calcium CaO et en dioxyde de carbone CO₂ selon la réaction (7): [Math 7] ${CaCO}_{3} \to CaO + {CO}_{2}$

Cette analyse permet une estimation de la pureté du carbonate de calcium obtenu supérieure à 60%.

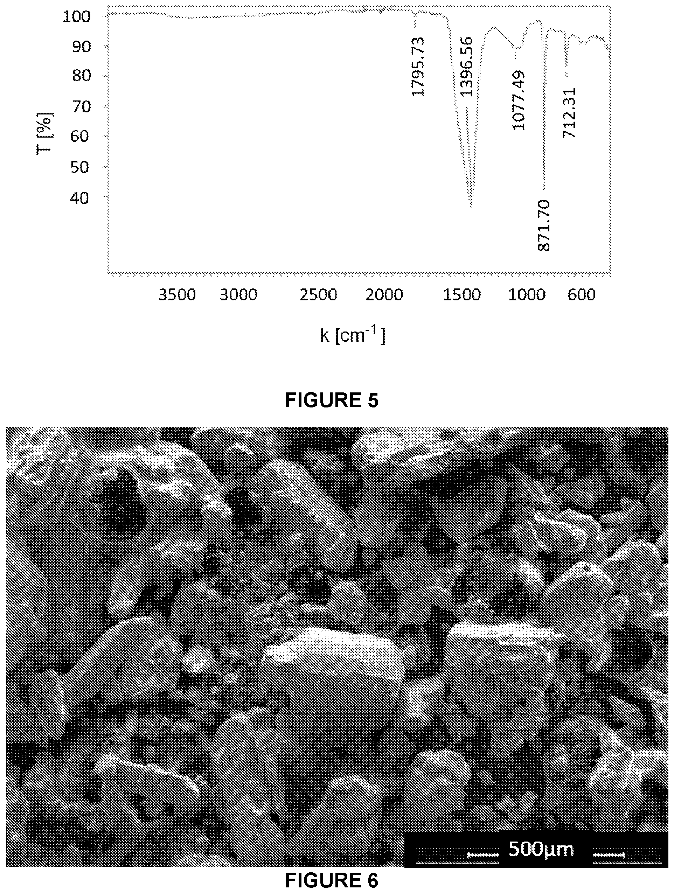

Les figures 4 et 5 montrent respectivement un diffractogramme de rayons X et un spectre infrarouge du carbonate de calcium obtenu dans l'exemple 2, permettant une estimation de la pureté du carbonate de calcium comprise entre 30% et 65%.

La figure 6 montre une micrographie par microscopie électronique de balayage (MEB) du carbonate de calcium obtenu dans l'exemple 2. Le carbonate de calcium est sous forme d'une poudre présentant une taille de grains inférieure à environ 300 µm.

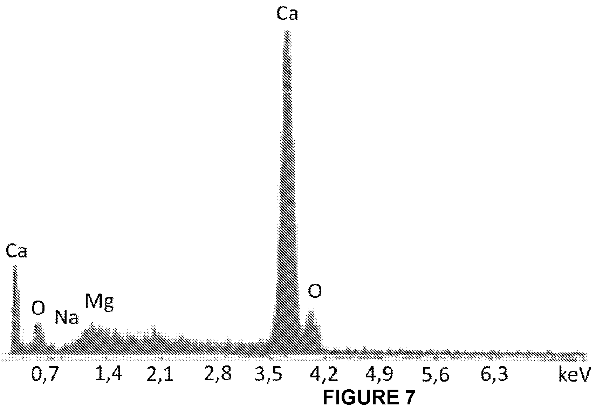

Le tableau 1 ci-dessous indique les quantités des différents éléments chimiques présents dans le carbonate de calcium obtenu dans l'exemple 2, mesurées par une analyse de rayons X à dispersion d'énergie (EDX) dont le spectre est présenté dans la figure 7. Cette analyse permet une estimation de la pureté du carbonate de calcium obtenu supérieure à 60%. Le calcium et l'oxygène sont évidemment très majoritaires, et les autres éléments présents dans l'eau de mer se retrouvent en petites quantités voire sous forme de traces.

**[Table 1]**

| Elément | Calcium | Oxygène | Magnésium | Sodium |
|---|---|---|---|---|
| Atome [%] | 51,30 | 5,73 | 1,30 | 0,17 |

### REFERENCES

WO 2010/142859
EP1513771A1
US 8846562
CN102627309A
CN101337685A
US 20180022614

## Revendications

1. Procédé d'absorption de dioxyde de carbone par du phosphogypse, comprenant une étape d'injection de dioxyde de carbone dans un milieu réactionnel comprenant une solution alcaline dont le pH est compris entre 7,5 et 9 et du phosphogypse, et la formation de carbonate de calcium, **caractérisé en ce que** la solution alcaline est de l'eau de mer.

2. Procédé selon la revendication 1 comprenant une étape de préparation du milieu réactionnel par dispersion du phosphogypse dans la solution alcaline, de préférence jusqu'à la stabilisation du pH à une valeur comprise entre 8,5 et 9,5.

3. Procédé selon l'une des revendications précédentes dans lequel le milieu réactionnel est agité pendant l'étape d'injection du dioxyde de carbone.

4. Procédé selon l'une des revendications précédentes comprenant une étape de filtration pour collecter le carbonate de calcium formé.

5. Procédé selon l'une des revendications précédentes dans lequel le dioxyde de carbone est injecté à un débit allant de 0,7 à 1,3 L/min.

6. Procédé selon l'une des revendications précédentes dans lequel le phosphogypse est présent à une concentration allant de 0,1 kg/L à 0,5 kg/L dans le milieu réactionnel.

## Patentansprüche

1. Verfahren zur Absorption von Kohlendioxid mittels Phosphogips, umfassend einen Schritt der Eindüsung von Kohlendioxid in ein Reaktionsmedium, das eine alkalische Lösung mit einem pH-Wert zwischen 7,5 und 9 und Phosphogips umfasst, und das Bilden von Calciumcarbonat, **dadurch gekennzeichnet, dass** die alkalische Lösung Meerwasser ist.

2. Verfahren nach Anspruch 1, umfassend einen Schritt der Herstellung des Reaktionsmediums durch Dispergieren des Phosphogipses in der alkalischen Lösung, vorzugsweise bis der pH-Wert auf einem Wert zwischen 8,5 und 9,5 stabilisiert ist.

3. Verfahren nach einem der vorhergehenden Ansprüche, wobei das Reaktionsmedium während des Schritts der Eindüsung des Kohlendioxids bewegt wird.

4. Verfahren nach einem der vorhergehenden Ansprüche, umfassend einen Filtrationsschritt zum Auffangen des gebildeten Calciumcarbonats.

5. Verfahren nach einem der vorhergehenden Ansprüche, wobei das Kohlendioxid mit einer Geschwindigkeit im Bereich von 0,7 bis 1,3 l/min eingedüst wird.

6. Verfahren nach einem der vorhergehenden Ansprüche, wobei der Phosphogips in einer Konzentration im Bereich von 0,1 kg/l bis 0,5 kg/l im Reaktionsmedium vorhanden ist.

## Claims

1. Process for absorbing carbon dioxide using phosphogypsum, comprising a step of injecting carbon dioxide into a reaction medium comprising an alkaline solution having a pH of between 7.5 and 9 and phosphogypsum, and the formation of calcium carbonate, **characterized in that** the alkaline solution is seawater.

2. Process according to Claim 1, comprising a step of preparing the reaction medium by dispersing the phosphogypsum in the alkaline solution, preferably until the pH has stabilized at a value of between 8.5 and 9.5.

3. Process according to either of the preceding claims, wherein the reaction medium is stirred during the step of injecting the carbon dioxide.

4. Process according to one of the preceding claims, comprising a filtration step in order to collect the calcium carbonate formed.

5. Process according to one of the preceding claims, wherein the carbon dioxide is injected at a flow rate ranging from 0.7 to 1.3 L/min.

6. Process according to one of the preceding claims, wherein the phosphogypsum is present at a concentration ranging from 0.1 kg/L to 0.5 kg/L in the reaction medium.
